# EUROPEAN PATENT APPLICATION

(11) **EP 4 435 897 A1**
(43) Date of publication of application: **25.09.2024**
(21) Application number: 21964296.4
(22) Date of filing: 16.11.2021
(51) Int. Cl.: H01M 4/583, H01G 11/40, H01G 11/86, H01M 10/0525, H01M 10/054

(54) **PREPARATION METHOD FOR CARBON ELECTRODE MATERIAL AND CARBON ELECTRODE MATERIAL**

(71) Applicant: Ningbo Shanshan New Material Tech Co, Ltd., Ningbo, Zhejiang 315177 (CN)
(72) Inventor: PAN, Fusen, Ningbo, Zhejiang 315177 (CN); ZHANG, Xiuyun, Ningbo, Zhejiang 315177 (CN); LI, Hong, Ningbo, Zhejiang 315177 (CN); WANG, Xufeng, Ningbo, Zhejiang 315177 (CN)
(74) Representative: Maiwald GmbH
(86) International application number: PCT/CN2021/130831
(87) International publication number: WO 2023/087129

(57) **Abstract**

A preparation method for a carbon electrode material and a carbon electrode material. The preparation method for a carbon electrode material comprises: carbonizing a pitch fiber, a resin fiber or a pitch-resin composite fiber obtained by spinning and curing, so as to obtain a carbon electrode material, the carbon electrode material being amorphous carbon. The carbon electrode material has excellent first charge capacity, a fast discharge constant-current ratio, an excellent capability for fast intercalation and deintercalation of lithium ions and sodium ions, and an excellent cycling capability.

## Description

### TECHNICAL FIELD

The present disclosure relates to a preparation method for a carbon electrode material and a carbon electrode material.

### BACKGROUND

Compared with other secondary batteries, lithium-ion batteries not only feature high energy density, high working voltage, and long cycle life, but also possess unique advantages such as good safety performance, environmental friendliness, and lack of pollution. Therefore, lithium batteries are widely used in a variety of mobile and stationary energy components. Mainstream lithium-ion batteries typically use graphite materials as anode. However, the crystalline structure of graphite materials determines that lithium-ion batteries cannot achieve rapid intercalation of lithium ions, and cannot meet the requirements for intercalation and migration of lithium ions at low temperatures. Improving the intercalation and migration speed of lithium ions in carbon anode materials can be achieved by disordering the carbon anode material and widening the interlayer spacing of graphite, that is, making the carbon anode material into a hard carbon structure. Hard carbon materials also exhibit outstanding advantages in terms of energy density and performance for supercapacitors.

With the global large-scale application of lithium batteries, the reserves and extraction of lithium resources are no longer able to meet the increasingly growing demand for lithium batteries, leading to serious conflicts. Sodium-ion batteries have a structure basically similar to that of lithium-ion batteries in principle, but by using the abundant sodium ions instead of the increasingly scarce lithium ions, the problem of lithium resource shortage is greatly alleviated. In addition to the abundant reserves of sodium salts at low prices, sodium-ion batteries also have outstanding advantages such as compatibility with lithium battery production lines, low cost, good safety, and environmental friendliness. Although sodium-ion batteries have a series of advantages, traditional graphite anode materials are difficult to be applied in the field of sodium batteries due to structural constraints. Hard carbon with large interlayer spacing, disordered arrangement of atomic layers, and appropriate micropores and ultramicropores is the most promising anode material for sodium-ion batteries.

Traditional hard carbon materials are mostly made from biomass materials through processes such as pulverization and heat treatment. While biomass materials are widely available and inexpensive, quality fluctuations caused by uncontrollable factors such as regional differences, variety differences, and vintage differences in biomass materials, as well as intrinsic impurity elements such as iron, calcium, silicon, and sulfur, result in disadvantages including high cost, poor batch stability, environmental pollution, and high impurity content for the hard carbon made from biomass materials. For example, in Chinese patent CN202011482937.9, one or more than one of wood, bamboo, or camellia oleifera fruit shell is used as the biomass raw material. The preparation method involves immersing the biomass raw material in sulfuric acid solution, and stirring at room temperature to obtain a suspension; dispersing the suspension in water, filtering, and drying to obtain a precursor; heating the precursor under an inert gas atmosphere for pre-carbonization, cooling, and ball milling to obtain a pre-carbonized powder; heating the pre-carbonized powder under an inert gas atmosphere for high-temperature carbonization, and cooling to obtain a biomass hard carbon anode material for sodium-ion batteries. The preparation method requires a large amount of water and chemical reagents such as sulfuric acid, resulting in acidic wastewater generation and high energy consumption during drying.

Single-component resins and multi-component resins typically have high batch stability and are less influenced by environmental and climatic factors. Therefore, hard carbon prepared using resin also has high batch stability. Chinese patent CN202011029115.5 discloses a preparation method of a phenolic resin/sucrose-based hard carbon microsphere material. In the method, phenolic resin, sucrose, and solvent are mixed for a solvothermal reaction; by utilizing the abundant functional groups in sucrose and phenolic resin, during the solvothermal reaction, the long-chain structure of phenolic resin undergoes a rearrangement, and hydroxyl groups in sucrose and unsaturated groups in phenolic resin undergoes a crosslinking reaction; the product is subjected to slow crystallization to obtain a smooth-surfaced spherical particle, which is then subjected to high-temperature carbonization to obtain a hard carbon material with spherical structure. The process employs a high-temperature, highpressure, and time-consuming solvothermal reaction, making the preparation of hard carbon inefficient.

### CONTENT OF THE PRESENT INVENTION

The technical problem to be solved by the present disclosure is to overcome the issues of carbon electrode materials in the prior art such as insufficient intercalation rate of lithium ions, difficulty in intercalation of sodium ions, suboptimal fast-charging performance, complex production process, and unsuitability for industrial production. The present disclosure provides a preparation method for a carbon electrode material and a carbon electrode material prepared from the preparation method. The carbon electrode material prepared by the present disclosure has large carbon interlayer spacing, a wide range of disordered structures, excellent first charge capacity, fast discharge constant-current ratio, excellent capability for fast intercalation and deintercalation of lithium ions and sodium ions, and excellent cycling capability. The preparation method of the present disclosure is simple, conducive to scalable production, cost-effective, and particularly suitable for the field of lithium batteries requiring fast charging such as consumer electronics, the field of sodium batteries such as energy storage, and the filed of supercapacitors.

The present disclosure mainly solves the above technical problem by the following technical means:
The present disclosure provides a preparation method for a carbon electrode material, which comprises: carbonizing a pitch fiber, a resin fiber, or a pitch-resin composite fiber obtained by spinning and curing, so as to obtain a carbon electrode material, the carbon electrode material being amorphous carbon.

In the present disclosure, the pitch fiber, resin fiber, or pitch-resin composite fiber may be obtained by spinning and curing a precursor.

Herein, the precursor may comprise a carbon source, for example, the precursor consists of a carbon source. The carbon source is at least one of a resin and a pitch. The resin may be a conventional resin used in the art for the preparation of carbon electrode materials, preferably at least one of petroleum resin, polyacrylonitrile, polyvinylpyrrolidone, and phenolic resin. In the precursor, the pitch cannot have a too high mesophase content, and the too high mesophase content will lead to unfavorable intercalation of sodium ions in the resulting electrode. Preferably, the pitch has a mesophase content of 5 wt% or less. More preferably, the precursor contains no mesophase pitch. The pitch is preferably a pitch with a quinoline insoluble content of 5 wt% or less. The pitch is preferably a pitch with a softening point of 150 to 300°C. The pitch is preferably a refined pitch.

Herein, the precursor may also comprise other components, and the other component may be at least one of a solvent, a pore-forming agent, a curing agent, a conductive additive, and a beneficial impurity atom. Whether the precursor comprises other components or not and which one or more of other components are comprised can be adjusted based on the physicochemical properties of the desired carbon source. The solvent serves to dissolve the carbon source. The solvent may be an organic solvent, such as at least one of *N,N-*dimethylformamide, *N*-methylpyrrolidone, quinoline, toluene, pyrrole, tetrahydrofuran, naphthalene, and wash oil. The solvent and the carbon source may have a weight ratio of 0 to 30%, such as 10%. The pore-forming agent serves to modulate the microcrystalline morphology, pore structure, and shape of the carbon electrode material. The pore-forming agent may be an organic or inorganic pore-forming agent, such as at least one of aluminum chloride, methylnaphthalene, and polyvinyl alcohol. The pore-forming agent is preferably a pore-forming agent with a pore-forming template function (*i.e.,* a template agent), such as at least one of polyvinylpyrrolidone, polyacrylonitrile, polystyrene, polyethylene glycol, poly(methyl methacrylate), poly(ethylene oxide)-poly(propylene oxide)-poly(ethylene oxide) triblock copolymer (P123), and Poloxamer (F127). The pore-forming agent and the carbon source may have a weight ratio of 0 to 10%, such as 0 to 5%, such as 2% or 3%.

The curing agent serves to modulate the curing behavior of the carbon source in a curing bath to increase or decrease the curing rate, and to modulate the curing behavior of the inner and outer fiber materials. The curing agent may be at least one of a peroxide, an oxide, and a free radical donor, such as at least one of ammonium persulfate and tetramethylenediamine. The curing agent and the carbon source may have a weight ratio of 0 to 10%, such as 5%.

The conductive additive may be a conventional conductive additive used in the manufacture of carbon electrode materials in the art, such as carbon nanotube (CNT), *etc.* The conductive additive and the carbon source may have a weight ratio conventional in the art, such as 0.05 to 0.5%, such as 0.05 to 0.4%, such as 0.1%. Generally, it can be adjusted based on the type of carbon source, the curing bath used, and the characteristics of the target material. The beneficial impurity atom may be a conventional beneficial impurity atom used in the manufacture of carbon electrode materials in the art, such as at least one of a phosphorus atom (e.g., provided by at least one of phosphoric acid, phytic acid, and phosphorus pentoxide), a nitrogen atom (e.g., provided by at least one of ammonia and urea), and a boron atom (*e.g.,* provided by boric acid). The beneficial impurity atom and the carbon source may have a weight ratio of 0 to 15%, such as 2%.

In the present disclosure, the spinning and curing comprises the specific steps of: spinning and curing the precursor to obtain a pitch fiber, a resin fiber, or a pitch-resin composite fiber.

Herein, the spinning and curing may further comprise the specific steps of: mixing the carbon source and other components to obtain a precursor.

Herein, the spinning and curing may further comprise the specific steps of: melting or dissolving the precursor before spinning. The melting temperature is, for example, 200 to 350°C.

Herein, the spinning and curing may further comprise the specific steps of: homogenizing the precursor before spinning. The homogenizing may include at least one of heating and stirring. The homogenizing may use at least one of, but not limited to, a reactor, a kneader, and a homogenizer.

In the present disclosure, the spinning is, for example, spinning by extrusion using a melt pump or a solution pump.

In the present disclosure, the spinning is, for example, electrospinning. The electrospinning may use an electrospinning device, and the voltage and bolus injection speed used by the electrospinning device may be selected based on the diameter of the target fiber, the type of precursor, and other conditions.

Herein, an uncured fiber is obtained after spinning the precursor. The uncured fiber may have a diameter of 1 to 100 µm, preferably 3 to 30 µm. The uncured fiber may have an aspect ratio (the ratio of the length to the diameter of the fiber) of 2 or more. The uncured fiber may be a fiber with equal diameter or a fiber with non-equal diameter. The uncured fiber may have a cross-section of at least one of a circular shape, an elliptical shape, a square shape, and an irregular shape. The uncured fiber is preferably a cylindrical fiber. The uncured fiber may have a curl radius greater than 10 times the diameter.

In the present disclosure, the purpose of the curing step is to cure the carbon source. The curing can be carried out by physical means, chemical means, or a combination of physical and chemical means. The curing by physical means can be achieved by at least one of electromagnetic wave such as ultraviolet rays or X-rays and heating such as hot air. The curing by chemical means can be achieved by including a curing agent in the precursor, or by subjecting the fiber obtained by spinning to an oxidizing gas (*e.g.,* at least one of air, oxygen, and ozone) or an oxidizing agent solution (*e.g.,* at least one of hydrogen peroxide, benzoyl peroxide solution, and nitric acid solution). The curing by a combination of physical and chemical means can be achieved, for example, by subjecting the fiber obtained by spinning to hot air or hot oxygen, or by subjecting the fiber obtained by spinning to hot air with simultaneous ultraviolet radiation. Herein, the curing can be carried out in a curing bath. The curing bath may be an atmosphere capable of curing the carbon source, for example, at least one of oxidizing gas, oxidizing agent solution, and electromagnetic wave radiation, for another example, at least one of air, oxygen, ozone, hydrogen peroxide, benzoyl peroxide solution, nitric acid solution, ultraviolet radiation, or X-ray radiation, for another example, at least one of air, oxygen, hydrogen peroxide, nitric acid solution, and ultraviolet radiation. Parameters such as the concentration of the oxidizing agent solution and the intensity of the electromagnetic wave can be adjusted based on the desired product properties. For example, the hydrogen peroxide may have a mass concentration of 5 to 50%. For example, the benzoyl peroxide solution may have a mass concentration of 3 to 15%. For example, the nitric acid solution may have a mass concentration of 5 to 50%. For example, the ultraviolet radiation may have an intensity of 300 to 3000 mW/cm². The curing bath has a temperature of, for example, room temperature to 400°C, preferably 250 to 370°C, such as 250 to 360°C. The curing has a period of, for example, 0.5 to 100 hours, preferably 1 to 72 hours, such as 2 to 5 hours, such as 3 to 4 hours. Preferably, the curing bath is hot air, the curing bath has a temperature of 250 to 370°C, the curing has a period of 1 to 72 hours, and the curing bath has a hot air ventilation frequency of 0.1 to 5 times/minute.

The temperature of the curing bath can be controlled by means of constant temperature control, segmented temperature control, or continuous temperature control. Preferably, the temperature of the curing bath is controlled by means of segmented temperature control, for example, in three temperature zones for temperature control, with a first temperature zone having a temperature of 280 to 320°C (*e.g.,* 300°C), a second temperature zone having a temperature of 320 to 360°C (e.g., 340°C), and a third temperature zone having a temperature of 340 to 380°C (*e.g.,* 360°C), for another example, in five temperature zones for temperature control, with a first temperature zone having a temperature of 260 to 300°C (*e.g.,* 280°C), a second temperature zone having a temperature of 280 to 320°C (*e.g.,* 300°C), a third temperature zone having a temperature of 300 to 340°C (*e.g.,* 320°C or 340°C), a fourth temperature zone having a temperature of 320 to 360°C (*e.g.,* 340°C or 350°C), and a fifth temperature zone having a temperature of 350 to 390°C *(*e.g., 370°C). When the temperature of the curing bath is controlled by means of segmented temperature control, each segment (*i.e.,* each temperature zone) may have a residence time of, for example, 0.1 to 2 hours, such as 0.6 hours or 0.75 hours.

In the present disclosure, the pitch fiber, resin fiber, or pitch-resin composite fiber preferably has a diameter of 3 to 30 µm. The pitch fiber, resin fiber, or pitch-resin composite fiber preferably has an aspect ratio of 2 or more. The pitch fiber, resin fiber, or pitch-resin composite fiber preferably has a cross-section of a circular shape or an elliptical shape with a length-width ratio of 4 or less. The pitch fiber, resin fiber, or pitch-resin composite fiber preferably has a mass ratio of volatile matter of 50% or less. The pitch fiber, resin fiber, or pitch-resin composite fiber preferably has the characteristic of not melting when heated to 500°C.

In the present disclosure, the preparation method for a carbon electrode material may further comprise: subjecting the pitch fiber, resin fiber, or pitch-resin composite fiber to pre-carbonization before carbonization.

Herein, the pre-carbonization comprises the specific steps of: subjecting the pitch fiber, resin fiber, or pitch-resin composite fiber to heat treatment at 450 to 700°C. The heat treatment allows sufficient reaction and decomposition of the carbon source and other components in the pitch fiber, resin fiber, or pitch-resin composite fiber to achieve exclusion of impurity atoms and dimensional stabilization.

Herein, the heat treatment has a period of, for example, 1 to 4 hours.

Herein, the heat treatment can be carried out using a low-temperature carbonization method conventional in the art.

Herein, the pre-carbonization can be carried out in an inert atmosphere (*e.g.,* at least one of nitrogen and inert gases, preferably at least one of nitrogen and argon), an oxidizing atmosphere (*e.g.,* at least one of oxidizing gases, or a mixture of at least one of oxidizing gases with at least one of nitrogen and inert gases, preferably at least one of air, oxygen, and ozone, or a mixture of at least one of air, oxygen, and ozone with at least one of nitrogen and inert gases), a reducing atmosphere (*e.g.,* at least one of ammonia and hydrogen, or a mixture of at least one of ammonia and hydrogen with at least one of nitrogen and inert gases), or a vacuum environment, or alternately in two or more of an inert atmosphere, an oxidizing atmosphere, a reducing atmosphere, and a vacuum environment. The atmosphere or environment for pre-carbonization can be selected according to the performance requirements of the target carbon electrode material. The atmosphere or environment for pre-carbonization can be switched according to temperature and/or time. Preferably, the pre-carbonization is carried out by introducing air for carbonization (*e.g.,* 10 to 50 minutes) at a temperature below 500°C (*e.g.,* 450°C to 500°C, such as 480°C), and then introducing nitrogen for carbonization (*e.g.,* 1 to 3 hours) at a temperature greater than 500°C (e.g., 550 to 600°C, such as 560°C). The air and nitrogen preferably have a gas flow rate of 0.01 to 0.5 L/(kg·min).

Herein, the heat treatment may be a constant temperature heat treatment, a continuous heating heat treatment, or a program-controlled heating-holding heat treatment; preferably a program-controlled heating-holding heat treatment.

The constant temperature heat treatment means holding the pitch fiber, resin fiber, or pitch-resin composite fiber directly at a desired temperature. The constant temperature heat treatment preferably has a temperature of 550 to 650°C; the constant temperature heat treatment preferably has a period of 1 to 4 hours.

The continuous heating heat treatment means holding the pitch fiber, resin fiber, or pitch-resin composite fiber after continuous heating to a final temperature. The continuous heating heat treatment preferably has a final temperature of 550 to 650°C; preferably has a heating rate of 1 to 5°C/minute; preferably has a holding period of 1 to 4 hours at the final temperature.

The program-controlled heating-holding heat treatment means a heat treatment method in which the pitch fiber, resin fiber, or pitch-resin composite fiber is placed in a program-controlled temperature device, and after setting a temperature-time curve, the device can operate automatically according to the set curve. The heat treatment curve can be set according to the characteristics of the fiber prepared by spinning and curing, taking into account the sufficient escape of volatile matter from the material. Preferably, the program-controlled heating-holding heat treatment comprises the specific steps of: holding the pitch fiber, resin fiber, or pitch-resin composite fiber in the air at 450 to 500°C for 10 to 50 minutes, and then switching to a nitrogen atmosphere and holding at 550 to 600°C for 1 to 3 hours. Preferably, the program-controlled heating-holding heat treatment comprises the specific steps of: holding the pitch fiber, resin fiber, or pitch-resin composite fiber in the air at 480°C for 30 minutes, and then switching to a nitrogen atmosphere and holding at 580°C for 2 hours. For example, using a pitch with a softening point of 250°C as the carbon source, the precursor containing no other components is melted at 300°C, and subjected to continuous spinning by extrusion using a melt pump, resulting in a fiber with a diameter of 15 µm. The fiber is subjected to hot-air curing at 300°C, 320°C, 340°C, and 360°C for 0.5 hours each to obtain a pitch fiber, which is held in the air at 480°C for 30 minutes, and then switched to a nitrogen atmosphere and held at 580°C for 2 hours to complete pre-carbonization.

The heat treatment can be carried out sequentially in three different heat treatment devices or in the same heat treatment device. When using the same heat treatment device, the temperature rise and fall is controlled through a stepwise heating and holding curve to complete the heat treatment process in three temperature zones.

The heat treatment can be carried out in an oven, a kiln, a heatable mixer, or other heating devices conventional in the art. The heat treatment is carried out preferably in a heatable mixer, more preferably in an electrically heated horizontal mixer or a rotary kiln.

In the present disclosure, the preparation method for a carbon electrode material may further comprise: subjecting the pitch fiber, resin fiber, or pitch-resin composite fiber to pulverization.

Herein, the pulverization can be carried out before pre-carbonization, after pre-carbonization, before carbonization, or after carbonization. When the pulverization is carried out can be set based on the performance of the pulverizing device and the process route.

Herein, the pulverizing device may be an air flow pulverizing device, a roller milling device, a mechanical milling device, or a ball milling device. The method for pulverization may be conventional in the art.

Herein, a fiber powder is obtained after subjecting the pitch fiber, resin fiber, or pitch-resin composite fiber to pulverization. The fiber powder has a particle size D50 of, for example, 1 to 30 µm, which can be adjusted according to the characteristics of the device and the desired product properties.

Herein, the pitch fiber, resin fiber, or pitch-resin composite fiber can be short cut, for example, to a length of 20 to 40 mm before pulverization.

In the present disclosure, the carbonizing preferably has a temperature of 700 to 1550°C, for example, 1000 to 1100°C, for another example, 1050°C. The carbonizing may be by means of a constant temperature heat treatment, a continuous heating heat treatment, or a program-controlled heating-holding heat treatment; preferably a program-controlled heating-holding heat treatment. The program-controlled heating-holding heat treatment is, for example, heating to 700 to 900°C and holding for 30 to 90 minutes, and then heating to 1000 to 1100°C and holding for 2 to 4 hours; preferably, the program-controlled heating-holding heat treatment is heating to 800°C and holding for 60 minutes, and then heating to 1050°C and holding for 3 hours. The carbonizing preferably has a final temperature of 850 to 1550°C, more preferably 950 to 1350°C. The carbonizing preferably has a residence time of 1 to 8 hours at the final temperature, more preferably 1 to 4 hours. The carbonizing may use a program-automatically-controlled device, such as various types of kilns and vacuum furnaces. When using a vacuum furnace, the material preferably has a controlled pressure of 5 kPa or less.

In the present disclosure, the carbonizing can be carried out in an inert atmosphere (*e.g.,* argon, nitrogen, or a mixture thereof), a reducing atmosphere (*e.g.,* ammonia, hydrogen, or a mixture thereof), or a vacuum environment. Preferably, the carbonizing is carried out in a reducing atmosphere (*e.g.,* ammonia, hydrogen, or a mixture of 5% hydrogen + 95% argon by volume) or a vacuum environment. More preferably, the carbonizing is carried out in a vacuum environment (*e.g.,* a vacuum furnace).

The present disclosure further provides a method for spinning and curing, comprising: spinning and curing the precursor to obtain a pitch fiber, a resin fiber, or a pitch-resin composite fiber.

Herein, the precursor is as described above.

Herein, the spinning and curing comprises the specific steps as described above.

Herein, the pitch fiber, resin fiber, or pitch-resin composite fiber can be carbonized to obtain amorphous carbon.

The present disclosure further provides a pitch fiber, a resin fiber, or a pitch-resin composite fiber obtained by the method for spinning and curing.

The present disclosure further provides a carbon electrode material prepared by the preparation method for a carbon electrode material.

The present disclosure further provides a battery comprising the carbon electrode material.

Preferably, the battery is a liquid battery, a solid battery, or a gel battery.

Preferably, the battery is a lithium-ion battery or a sodium-ion battery.

Preferably, the lithium-ion battery has the following properties: a button half-cell 3C fast discharge constant-current ratio of higher than 70%; a first charge capacity of higher than 380 mAh/g; a capacity retention after 1000 cycles of 85% or more.

Preferably, the sodium-ion battery has the following properties: a button half-cell charge/discharge current density of 100 mA/g; a first charge capacity of higher than 300 mAh/g; a capacity retention after 1000 cycles of 85% or more.

Preferably, the carbon electrode material serves as anode.

The present disclosure further provides a supercapacitor comprising the carbon electrode material.

On the basis of not violating the common sense in the art, the preferred conditions above can be arbitrarily combined to obtain the preferred examples of the present disclosure. It should be noted that the best example may have performance beyond the test results of the present disclosure due to technological developments.

The reagents and raw materials used in the present disclosure are commercially available.

The positive and progressive effect of the present disclosure is that:
(1) The carbon electrode material prepared by the present disclosure has excellent first charge capacity, fast discharge constant-current ratio, excellent capability for fast intercalation and deintercalation of lithium ions, and excellent cycling capability, as well as high capacity for intercalation and deintercalation of sodium ions, and stable and continuous cycling capability.
(2) In the present disclosure, resins and pitches that are stable in batches, resource-rich, and inexpensive are used as raw materials, so that the fiber-based carbon electrode material prepared by the disclosed method for spinning and curing is inexpensive, stable in batches, and conducive to large-scale industrial production and wide application.
(2) In the present disclosure, by using the spinning and curing technology and program-automatically-controlled device, the curing efficiency is greatly improved and the process is stabilized, which is helpful for mass production and reducing the differences between product batches, greatly improving the production efficiency.
(4) The spinning and curing technology disclosed in the present disclosure and the fiber-based carbon electrode material prepared by the technology can reduce or avoid the use of harmful chemical reagents and hazardous chemicals during the preparation process, improve working environment and minimize environmental pollution, reduce carbon emissions, and contribute to green development.

### BRIEF DESCRIPTION OF THE DRAWINGS

Figure 1 shows an SEM image of a fiber prepared by spinning and curing in example 1 of the present disclosure after short cutting.
Figure 2 shows an SEM image of a carbon anode material made from the fiber prepared by spinning and curing in example 1 of the present disclosure.
Figure 3 shows an XRD pattern of the carbon anode material made from the fiber prepared by spinning and curing in example 1 of the present disclosure.

### DETAILED DESCRIPTION OF THE PREFERRED EMBODIMENT

The present disclosure is further described below by way of examples, but the present disclosure is not thereby limited to the scope of the described examples. The experimental methods for which the specific conditions are not specified in the following examples are selected according to the conventional methods and conditions, or according to the commodity instructions.

Unless otherwise specified, in the present disclosure, the softening point of the pitch is measured according to the method of GB/T 4507-2014.

Unless otherwise specified, in the present disclosure, the mesophase content of the pitch is measured according to the method of GB/T 38396-2019.

Unless otherwise specified, in the present disclosure, the toluene insoluble content is measured according to the method of GB/T 2292-2018, and the quinoline insoluble content is measured according to the method of GB/T 2293-2019.

Unless otherwise specified, in the present disclosure, the volatile matter content is measured according to the method DB13/T 2566-2017.

Unless otherwise specified, in the present disclosure, room temperature means 15 to 35°C. In the following examples and comparative examples, the pitch is a commercially available petroleum pitch having a toluene insoluble content of less than 30 wt%, a quinoline insoluble content of less than 3 wt%, and a mesophase content of less than 1 wt% with no extinction under a polarizing microscope. Other reagents are commercially available with a purity of analytical grade (AR) or higher.

The melt pump used in the following examples is a melt gear pump, which is a CT3000F precision gear pump purchased from Baoding Lead Fluid Technology Co., Ltd.

The solution pump used in the following examples is a BT103S speed-variable peristaltic pump purchased from Baoding Lead Fluid Technology Co., Ltd.

The pre-carbonization in the following examples is carried out in a GSL-1400X-III tube furnace purchased from Hefei Kejing Materials Technology Co., Ltd.

### Example 1

### (1) Preparation of fiber raw materials by spinning and curing

A commercially available petroleum pitch with a softening point of 270°C was used as the precursor without adding any other components. The pitch was heated to 320°C and melted, followed by continuous spinning by extrusion using a melt pump, in which a spinneret plate made of 304 stainless steel with 200 holes arranged in a single row and having a hole diameter of 100 µm and a bolus injection rate of 600 mL/h was used. The resulting fiber had a diameter of 18 µm, which was continuous, cylindrical, and straight without curling. The resulting fiber was cured in a curing bath of hot air with a flow rate of 0.1 m³/kg, by passing through five temperature zones of 280°C, 300°C, 320°C, 340°C, and 370°C, each zone being 1.2 meters long, with a residence time of 0.6 hours per zone and a total residence time of 3 hours in the curing bath. After the curing bath, a continuous pitch fiber was collected by a winding mechanism (a roller in this example). The winding mechanism had a linear speed of 2 m/h. The resulting fiber had a diameter of 17 µm, which was continuous, straight without curling, and cylindrical, with a mass ratio of volatile matter of 50% or less.

### (2) Preparation of carbon anode materials from fibers prepared by spinning and curing

The continuous pitch fiber prepared by spinning and curing as described above was used as the raw material and first short cut to a length of 30 mm. The short-cut fiber was used as the raw material by holding in hot air at 480°C for 30 minutes before switching to a nitrogen atmosphere and holding in nitrogen at 560°C for 2 hours to complete pre-carbonization, in which both hot air and nitrogen had a gas flow rate of 0.2 L/(kg·min). The pre-carbonized fiber was ball milled to a fiber length of 1 mm or less, and then pulverized by air flow to a particle size D50 of 5 to 7 µm, resulting in a pulverized pre-carbonized fiber. The pulverized pre-carbonized fiber was placed in a vacuum furnace with a material pressure controlled at 300 to 1000 Pa, and subjected to carbonization at 1050°C for 3 hours, resulting in a carbon anode material.

### Example 2

A commercially available petroleum pitch with a softening point of 270°C was used as the precursor by adding 0.4 wt% of single-walled carbon nanotube-N-methylpyrrolidone dispersion based on 0.1% by weight of the pitch (calculated according to the weight of single-walled carbon nanotube). The mixture was then heated to 320°C and homogenized at high speed in a homogenizer for 30 minutes to obtain a spinning solution. The remaining steps were carried out following the method in example 1.

It can be seen from the XRD pattern that the resulting carbon electrode material is amorphous carbon.

### Example 3

### (1) Preparation of fiber raw materials by spinning and curing

A commercially available petroleum pitch with a softening point of 270°C was used as the precursor without adding any other components. The pitch was heated to 320°C and melted, followed by continuous spinning by extrusion using a melt pump, in which a spinneret plate made of 304 stainless steel with 200 holes arranged in a single row and having a hole diameter of 100 µm and a bolus injection rate of 400 mL/h was used. The resulting fiber had a diameter of 18 µm, which was a continuous, cylindrical, and straight fiber. The resulting fiber was cured in a curing bath of hot air with a flow rate of 0.1 m³/kg, by passing through five temperature zones of 280°C, 300°C, 330°C, 350°C, and 370°C, each zone being 1.2 meters long, with a residence time of 0.75 hours per zone and a total residence time of 3.75 hours in the curing bath. After the curing bath, a continuous pitch fiber prepared by spinning and curing was collected by a winding mechanism (a roller in this example). The winding mechanism had a linear speed of 1.6 m/h. The resulting fiber had a diameter of 17 µm, which was a continuous, cylindrical, and straight fiber with a mass ratio of volatile matter of 50% or less.

### (2) Preparation of carbon anode materials from fibers prepared by spinning and curing

The preparation was carried out following the method in example 1.

It can be seen from the XRD pattern that the resulting carbon electrode material is amorphous carbon.

### Example 4

### (1) Preparation of fiber raw materials by spinning and curing

A commercially available petroleum pitch with a softening point of 250°C was used as the precursor by adding 5 wt% of 1-methylnaphthalene and 3 wt% of aluminum chloride. The mixture was then heated to 300°C in a closed chamber and homogenized in a homogenizer for 30 minutes to obtain a spinning solution. The remaining steps were carried out following the method in example 1.

### (2) Preparation of carbon anode materials from fibers prepared by spinning and curing

The continuous fiber prepared by spinning and curing as described above was used as the raw material and first short cut to a length of 30 mm. The short-cut fiber was used as the raw material by holding in hot air at 480°C for 30 minutes and then holding in nitrogen at 560°C for 2 hours to complete pre-carbonization. The entire process was in a nitrogen atmosphere with a gas flow rate of 0.2 L/(kg·min). The pre-carbonized fiber was ball milled to a fiber length of 1 mm or less, and then pulverized by air flow to a particle size D50 of 5 to 7 µm, resulting in a pulverized pre-carbonized fiber. The pulverized fiber powder was placed in a vacuum furnace with a material pressure controlled at 300 to 1000 Pa, and subjected to carbonization at 1050°C for 3 hours, resulting in a carbon anode material.

It can be seen from the XRD pattern that the resulting carbon electrode material is amorphous carbon.

### Example 5

### (1) Preparation of fiber raw materials by spinning and curing

The preparation was carried out following the method in example 1.

### (2) Preparation of carbon anode materials from fibers prepared by spinning and curing

The continuous fiber prepared by spinning and curing as described above was used as the raw material and first short cut to a length of 30 mm. The short-cut fiber was used as the raw material by holding in hot air at 480°C for 30 minutes before switching to a nitrogen atmosphere and holding in nitrogen at 560°C for 2 hours to complete pre-carbonization with a gas flow rate of 0.2 L/(kg·min). The pre-carbonized fiber was ball milled to a fiber length of 1 mm or less, and then pulverized by air flow to a particle size D50 of 5 to 7 µm, resulting in a pulverized pre-carbonized fiber. The pulverized fiber powder was placed in a nitrogen atmosphere furnace, and subjected to carbonization at 1050°C for 3 hours with a gas flow rate of 0.1 L/(kg·min), resulting in a carbon anode material.

It can be seen from the XRD pattern that the resulting carbon electrode material is amorphous carbon.

### Example 6

### (1) Preparation of fiber raw materials by spinning and curing

PVP (polyvinylpyrrolidone) K90 (model) was dissolved in NMP *(N-*methylpyrrolidone) to prepare a spinning solution with a mass ratio of 15%. 3% of the mass of PVP of Poloxamer F127 (purchased from Sinopharm Chemical Reagent Co., Ltd.) and 1% of the mass of PVP of polyethylene glycol 600 (purchased from Sinopharm Chemical Reagent Co., Ltd.) were then added thereto and mixed at room temperature for 30 minutes to obtain a spinning solution. Continuous spinning was carried out by extrusion using a melt pump, in which a spinneret plate made of 304 stainless steel with 200 holes arranged in a single row and having a hole diameter of 100 µm and a bolus injection rate of 400 mL/h was used. The resulting fiber had a diameter of 22 µm, which was a continuous, cylindrical, and straight fiber. The resulting fiber was cured in a curing bath of hot air with a flow rate of 0.1 m³/kg, by passing through five temperature zones of 280°C, 300°C, 330°C, 350°C, and 370°C, each zone being 1.2 meters long, with a residence time of 0.75 hours per zone and a total residence time of 3.75 hours in the curing bath. After the curing bath, a continuous pitch fiber prepared by spinning and curing was collected by a winding mechanism (a roller in this example). The winding mechanism had a linear speed of 1 m/h. The resulting fiber had a diameter of 16 µm, which was a continuous, cylindrical, and straight fiber with a mass ratio of volatile matter of 50% or less.

### (2) Preparation of carbon anode materials from fibers prepared by spinning and curing

The continuous fiber prepared by spinning and curing as described above was used as the raw material and first short cut to a length of 30 mm. The short-cut fiber was used as the raw material by holding in hot air at 480°C for 30 minutes before switching to a nitrogen atmosphere and holding in nitrogen at 560°C for 2 hours to complete pre-carbonization with a gas flow rate of 0.2 L/(kg·min). The pre-carbonized fiber was ball milled to a fiber length of 1 mm or less, and then pulverized by air flow to a particle size D50 of 5 to 7 µm, resulting in a pulverized pre-carbonized fiber. The pulverized fiber powder was placed in a nitrogen atmosphere furnace, and subjected to carbonization at 1050°C for 3 hours with a gas flow rate of 0.1 L/(kg·min), resulting in a carbon anode material.

It can be seen from the XRD pattern that the resulting carbon electrode material is amorphous carbon.

### Comparative example 1

In this comparative example, a commercially available petroleum pitch with a softening point of 270°C was directly tested.

### Comparative example 2

In this comparative example, a commercially available petroleum pitch with a softening point of 270°C was pulverized to a D50 of 5 to 7 µm, then placed in a nitrogen atmosphere furnace, and subjected to carbonization at 1050°C for 3 hours, resulting in a carbon anode material. Due to the agglomeration of the material after carbonization, it was further pulverized to a D50 of 5 to 7 µm.

### Effect example 1

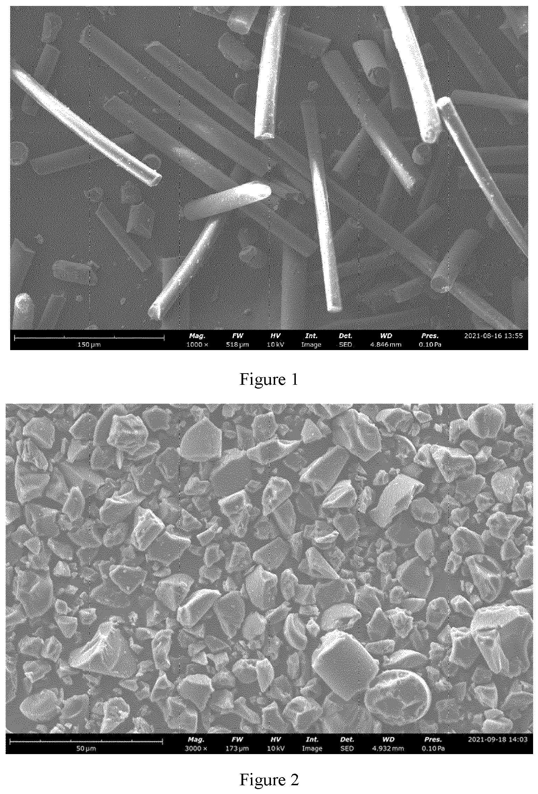

The physicochemical properties of the carbon anode materials produced in the examples and comparative examples were tested using conventional methods in the art. The test results are shown in Figures 1 to 3 and Table 1.

Herein, the particle size D50 was measured by Malvern Mastersizer 2000;
the apparent morphology was measured by ZEISS 500 field emission scanning electron microscopy;
the XRD pattern was measured by a Bruker D8 X-ray diffractometer using θ-2θ scanning mode with a step size of 2°/s and Cu-Ka radiation as the light source (wavelength of 0.154 nm).

Figure 1 shows an SEM image of a fiber prepared by spinning and curing in example 1 of the present disclosure after short cutting. As can be seen from the figure, the fibers prepared by spinning and curing in the present disclosure are mostly straight fibers with smooth surfaces without defects such as pits and burrs, and without undesirable structures such as splitting, bending, and local expansion or contraction. The fibers are uniform in thickness and basically the same in diameter. High-quality fibers are the basis for obtaining high-quality carbon anode materials.

Figure 2 shows an SEM image of a carbon anode material made from the fiber prepared by spinning and curing in example 1 of the present disclosure. As can be seen from the figure, although the fiber structure has basically disappeared after pre-carbonization, carbonization, and pulverization, no obvious undesirable structures such as foaming, debris, and droplets are observed on the fibers, and there are no obvious cracks or voids. The intact particle morphology contributes to the physicochemical and processing properties of the material.

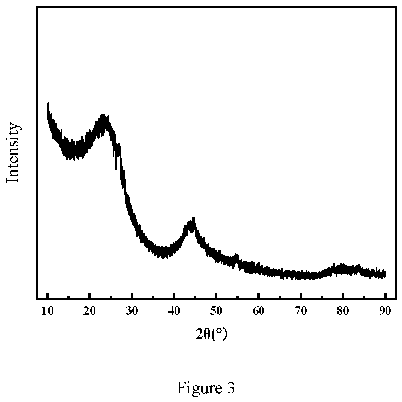

Figure 3 shows an XRD pattern of a carbon anode material made from the fiber prepared by spinning and curing in example 1 of the present disclosure. As can be seen from Figure 3, the carbon anode material made from the fiber prepared by spinning and curing has an amorphous carbon structure, with a large carbon interlayer spacing, which is conducive to the intercalation and deintercalation of sodium ions. The XRD pattern shows a broad, low-intensity peak near the 2θ angle of 23°, indicating that the resulting carbon anode material has a wide range of disordered structures. In addition, the peak is shifted from the 2θ angle of 23° to a small angle, indicating a (002) interplanar spacing greater than 0.3354 nm.

### Effect example 2

### (1) Preparation of electrodes

The carbon anode materials obtained in examples 1 to 5 and comparative examples 1 to 2 were respectively mixed with acetylene black conductive agent and PVDF binder at a mass ratio of 8:1:1 at room temperature. The mixture was dissolved in NMP as a solvent to prepare a uniform slurry. The slurry was uniformly coated on a copper foil at a coating density of about 6 mg/cm². The coated copper foil was then dried in a vacuum drying oven at 80°C for 12 hours. The dried copper foil was cut into circular pieces with an area of 2 cm² as working electrodes.

### (2) Assembly of button cells

Assembly of lithium-ion button cells: CR-2032 type button cells were assembled in a vacuum glove box by using metallic lithium sheet as the anode and counter electrode, the product obtained in step (1) as the working electrode, Celgard 2400 polypropylene porous membrane as the separator, and 1 mol/L solution of LiPF₆/EC and DEC with a volume ratio of 1:1 as the electrolyte at room temperature, and tightly and mechanically sealed.

Assembly of sodium-ion button cells: CR-2032 type button cells were assembled in a vacuum glove box by using metallic sodium sheet as the anode and counter electrode, the product obtained in step (1) as the working electrode, GE-Whatman glass fiber diaphragm as the separator, and 1 mol/L solution of NaPF₆/EC and DMC with a volume ratio of 1:1 as the electrolyte at room temperature, and tightly and mechanically sealed.

### (3) Testing of specific capacity and capacity retention

Testing of specific capacity and capacity retention of lithium-ion button cells: The assembled cells were allowed to stand at room temperature for 24 hours before starting electrochemical testing. The Arbin battery testing system was set with a designed capacity of 360 mAh/g, a current of 0.1 C used for the first week of testing, the first discharge to 0 V, and a charging voltage range of 0 V to 2 V After charging or discharging, the system was allowed to stand for 5 minutes before proceeding to the next step. During the testing of 3C fast discharge constant-current ratio of button cells, the button cells after 3 weeks of 0.1 C cycles were first charged at 0.1 C to 2 V, then discharged at 3 C to 5 mV to obtain capacity a, and discharged at 0.1 C to 5 mV to obtain capacity b. 3C fast discharge constant-current ratio = a / (a + b) * 100%. Capacity retention after 1000 cycles is determined by charging and discharging cycling with 1 C constant current. Capacity retention after 1000 cycles = 1003rd charging capacity / 3rd charging capacity * 100%.

Testing of specific capacity and capacity retention of sodium-ion button cells: The assembled cells were allowed to stand at room temperature for 24 hours before starting electrochemical testing. The Arbin battery testing system was set with a current of 100 mA/g used for the first week of testing, the first discharge to 0 V, and a charging voltage range of 0 V to 2 V based on the mass of the active material. After charging or discharging, the system was allowed to stand for 5 minutes before proceeding to the next step. Capacity retention after 1000 cycles is determined by charging and discharging cycling with 1 C constant current. Capacity retention after 1000 cycles = 1003rd charging capacity / 3rd charging capacity * 100%.

After testing, the particle size and specific surface area of the carbon anode materials prepared in examples 1 to 6 and comparative examples 1 to 2, as well as the capacity, 3C fast discharge constant-current ratio, and capacity retention after 1000 cycles for lithium-ion and sodium-ion batteries are shown in Table 1.

**Table 1: Testing results of properties of carbon anode materials**

| Item | Particle size D50 µm | First charge capacity for lithium-ion batteries mAh/g | 3C fast discharge constant-current ratio% | Capacity retention% after 1000 cycles | First charge capacity for sodium-ion batteries mAh/g | Capacity retention% after 1000 cycles |
|---|---|---|---|---|---|---|
| Example 1 | 5.7 | 393 | 72 | 87 | 307 | 89 |
| Example 2 | 5.6 | 392 | 74 | 91 | 303 | 92 |
| Example 3 | 5.5 | 385 | 73 | 85 | 301 | 86 |
| Example 4 | 5.9 | 381 | 70 | 83 | 297 | 85 |
| Example 5 | 5.8 | 384 | 73 | 88 | 310 | 88 |
| Example 6 | 5.6 | 367 | 78 | 86 | 304 | 87 |
| Comparative example 1 | 6.1 | 72 | 2 | - | - | - |
| Comparative example 2 | 5.7 | 260 | 40 | - | 61 | - |

| | | | | | | |
|---|---|---|---|---|---|---|
| Note: - indicates that the data is abnormal or cannot be tested. | | | | | | |

As can be seen from Table 1, untreated pitch cannot be directly used in lithium-ion or sodium-ion batteries. The pitch without spinning and curing that has undergone direct carbonization and pulverization can be tested for a capacity for intercalation and deintercalation of lithium ions and sodium ions, but exhibits very poor electrochemical performance, making it difficult to achieve commercial applications in the field of lithium-ion or sodium-ion batteries. Although the carbon anode materials of examples 1 to 6 have far superior first charge capacity, 3C fast discharge constant-current ratio, and capacity retention after 1000 cycles than any one of the comparative examples, as can be seen from the comparison of 3C fast discharge constant-current ratio, the carbon anode materials of the present disclosure have high intercalation rate of lithium ions. This is due to the fact that the pitch or resin precursor that has undergone spinning and curing has changed its physicochemical properties, and has achieved the purpose of producing fibers that do not melt at higher temperatures (e.g., 500°C). The addition of single-walled carbon nanotubes facilitates the spinning and curing technology and the electrochemical properties of the fiber-based carbon anode material prepared by the technology, but the enhancement is limited. Vacuum carbonization facilitates the spinning and curing technology and the electrochemical properties of the fiber-based carbon anode material prepared by the technology, which is mainly due to the fact that vacuum carbonization facilitates the generation and development of microporous structures in the material.

Although specific embodiments of the present disclosure have been described above, it should be understood by those skilled in the art that these are merely illustrative, and various changes or modifications can be made to these embodiments without departing from the principles and essence of the present disclosure. Therefore, the scope of the present disclosure is limited by the appended claims.

## Claims

1. A preparation method for a carbon electrode material, comprising: carbonizing a pitch fiber, a resin fiber, or a pitch-resin composite fiber obtained by spinning and curing, so as to obtain a carbon electrode material, the carbon electrode material being amorphous carbon.

2. The preparation method for the carbon electrode material according to claim 1, wherein the pitch fiber, resin fiber, or pitch-resin composite fiber is obtained by spinning and curing a precursor.

3. The preparation method for the carbon electrode material according to claim 2, wherein the precursor comprises a carbon source, and the carbon source is at least one of a resin and a pitch; preferably, the resin is at least one of petroleum resin, polyacrylonitrile, polyvinylpyrrolidone, and phenolic resin; preferably, in the precursor, the pitch has a mesophase content of 5 wt% or less; preferably, the pitch is a pitch with a quinoline insoluble content of 5 wt% or less; preferably, the pitch is a pitch with a softening point of 150 to 300°C;
or, the pitch fiber, resin fiber, or pitch-resin composite fiber has a diameter of 3 to 30 µm;
or, the pitch fiber, resin fiber, or pitch-resin composite fiber has an aspect ratio of 2 or more;
or, the pitch fiber, resin fiber, or pitch-resin composite fiber has a cross-section of a circular shape or an elliptical shape with a length-width ratio of 4 or less;
or, the pitch fiber, resin fiber, or pitch-resin composite fiber has a mass ratio of volatile matter of 50% or less;
or, the pitch fiber, resin fiber, or pitch-resin composite fiber does not melt when heated to 500°C.

4. The preparation method for the carbon electrode material according to claim 3, wherein the precursor further comprises other components, and the other component is at least one of a solvent, a pore-forming agent, a curing agent, a conductive additive, and a beneficial impurity atom.

5. The preparation method for the carbon electrode material according to claim 4, wherein the solvent is an organic solvent, such as at least one of *N,N-*dimethylformamide, *N-*methylpyrrolidone, quinoline, toluene, pyrrole, tetrahydrofuran, naphthalene, and wash oil;
or, the solvent and the carbon source have a weight ratio of 0 to 30%;
or, the pore-forming agent is an organic or inorganic pore-forming agent, such as at least one of aluminum chloride, methylnaphthalene, and polyvinyl alcohol; preferably, the pore-forming agent is a pore-forming agent with a pore-forming template function, such as at least one of polyvinylpyrrolidone, polyacrylonitrile, polystyrene, polyethylene glycol, poly(methyl methacrylate), polyethylene oxide)-poly(propylene oxide)-poly(ethylene oxide) triblock copolymer, and Poloxamer;
or, the pore-forming agent and the carbon source have a weight ratio of 0 to 10%;
or, the curing agent is at least one of a peroxide, an oxide, and a free radical donor, such as at least one of ammonium persulfate and tetramethylenediamine;
or, the curing agent and the carbon source have a weight ratio of 0 to 10%;
or, the conductive additive is a carbon nanotube;
or, the conductive additive and the carbon source have a weight ratio of 0.05 to 0.5%;
or, the beneficial impurity atom is at least one of a phosphorus atom, a nitrogen atom, and a boron atom;
or, the beneficial impurity atom and the carbon source have a weight ratio of 0 to 15%.

6. The preparation method for the carbon electrode material according to any one of claims 1 to 5, wherein the spinning and curing comprises the specific steps of: spinning and curing the precursor to obtain a pitch fiber, a resin fiber, or a pitch-resin composite fiber.

7. The preparation method for the carbon electrode material according to claim 6, wherein the spinning is spinning by extrusion using a melt pump or a solution pump;
or, the spinning and curing further comprises the specific steps of: mixing the carbon source and other components to obtain a precursor;
or, the spinning and curing further comprises the specific steps of: melting or dissolving the precursor before spinning;
or, the spinning and curing further comprises the specific steps of: homogenizing the precursor before spinning.

8. The preparation method for the carbon electrode material according to claim 6, wherein the spinning is electrospinning.

9. The preparation method for the carbon electrode material according to claim 6, wherein an uncured fiber is obtained after spinning the precursor;
preferably, the uncured fiber has a diameter of 1 to 100 µm; or, the uncured fiber has an aspect ratio of 2 or more; or, the uncured fiber has a cross-section of at least one of a circular shape, an elliptical shape, a square shape, and an irregular shape.

10. The preparation method for the carbon electrode material according to claim 6, wherein the curing is carried out by physical means, chemical means, or a combination of physical and chemical means;
for example, the curing by physical means is achieved by at least one of electromagnetic wave and heating; or, for example, the curing by chemical means is achieved by including a curing agent in the precursor, or by subjecting the fiber obtained by spinning to an oxidizing gas or an oxidizing agent solution; or, for example, the curing by the combination of physical and chemical means is achieved by subjecting the fiber obtained by spinning to hot air or hot oxygen, or by subjecting the fiber obtained by spinning to hot air with simultaneous ultraviolet radiation.

11. The preparation method for the carbon electrode material according to claim 6, wherein the curing is carried out in a curing bath.

12. The preparation method for the carbon electrode material according to claim 11, wherein the curing bath is at least one of an oxidizing gas, an oxidizing agent solution, and an electromagnetic wave radiation, such as at least one of air, oxygen, ozone, hydrogen peroxide, benzoyl peroxide solution, nitric acid solution, ultraviolet radiation, or X-ray radiation;
or, the curing bath has a temperature of room temperature to 400°C, preferably 250 to 370°C;
or, the curing has a period of 0.5 to 100 hours, preferably 1 to 72 hours;
or, the temperature of the curing bath is controlled by means of constant temperature control, segmented temperature control, or continuous temperature control; preferably, the temperature of the curing bath is controlled by means of segmented temperature control, for example, in three temperature zones for temperature control, with a first temperature zone having a temperature of 280 to 320°C, a second temperature zone having a temperature of 320 to 360°C, and a third temperature zone having a temperature of 340 to 380°C, for another example, in five temperature zones for temperature control, with a first temperature zone having a temperature of 260 to 300°C, a second temperature zone having a temperature of 280 to 320°C, a third temperature zone having a temperature of 300 to 340°C, a fourth temperature zone having a temperature of 320 to 360°C, and a fifth temperature zone having a temperature of 350 to 390°C; preferably, when the temperature of the curing bath is controlled by means of segmented temperature control, each temperature zone has a residence time of 0.1 to 2 hours.

13. The preparation method for the carbon electrode material according to claim 1, wherein the preparation method for the carbon electrode material further comprises: subjecting the pitch fiber, resin fiber, or pitch-resin composite fiber to pre-carbonization before carbonization;
preferably, the pre-carbonization comprises the specific steps of: subjecting the pitch fiber, resin fiber, or pitch-resin composite fiber to heat treatment at 450 to 700°C; for example, the heat treatment has a period of 1 to 4 hours; for example, the heat treatment is a constant temperature heat treatment, a continuous heating heat treatment, or a program-controlled heating-holding heat treatment; preferably, the constant temperature heat treatment has a temperature of 550 to 650°C, and the constant temperature heat treatment has a period of 1 to 4 hours; preferably, the continuous heating heat treatment has a final temperature of 550 to 650°C, a heating rate of 1 to 5°C/minute, and a holding period of 1 to 4 hours at the final temperature; preferably, the pre-carbonization is carried out in an inert atmosphere, an oxidizing atmosphere, a reducing atmosphere, or a vacuum environment, or alternately in two or more of an inert atmosphere, an oxidizing atmosphere, a reducing atmosphere, and a vacuum environment; preferably, the program-controlled heating-holding heat treatment comprises the specific steps of: holding the pitch fiber, resin fiber, or pitch-resin composite fiber in the air at 450 to 500°C for 10 to 50 minutes, and then switching to a nitrogen atmosphere and holding at 550 to 600°C for 1 to 3 hours.

14. The preparation method for the carbon electrode material according to claim 13, wherein the preparation method for the carbon electrode material further comprises: subjecting the pitch fiber, resin fiber, or pitch-resin composite fiber to pulverization; the pulverization is carried out before pre-carbonization, after pre-carbonization, before carbonization, or after carbonization;
preferably, a fiber powder is obtained after subjecting the pitch fiber, resin fiber, or pitch-resin composite fiber to pulverization, and the fiber powder has a particle size D50 of 1 to 30 µm; or, preferably, the pitch fiber, resin fiber, or pitch-resin composite fiber is short cut, for example, to a length of 20 to 40 mm before pulverization.

15. The preparation method for the carbon electrode material according to claim 1, wherein the carbonizing has a temperature of 700 to 1550°C;
or, the carbonizing is by means of a constant temperature heat treatment, a continuous heating heat treatment, or a program-controlled heating-holding heat treatment; preferably, the program-controlled heating-holding heat treatment is carried out by heating to 700 to 900°C and holding for 30 to 90 minutes, and then heating to 1000 to 1100°C and holding for 2 to 4 hours;
or, the carbonizing is carried out in an inert atmosphere, a reducing atmosphere, or a vacuum environment.

16. A carbon electrode material prepared by the preparation method according to any one of claims 1 to 15.

17. A method for spinning and curing, comprising: spinning and curing a precursor to obtain a pitch fiber, a resin fiber, or a pitch-resin composite fiber; wherein the pitch fiber, resin fiber, or pitch-resin composite fiber can be carbonized to obtain amorphous carbon.

18. A pitch fiber, resin fiber, or pitch-resin composite fiber prepared by the method for spinning and curing according to claim 17.

19. A battery, comprising the carbon electrode material according to claim 16;
preferably, the battery is a liquid battery, a solid battery, or a gel battery; or, preferably, the battery is a lithium-ion battery or a sodium-ion battery; more preferably, the lithium-ion battery has the following properties: a button half-cell 3C fast discharge constant-current ratio of higher than 70%; a first charge capacity of higher than 380 mAh/g; a capacity retention after 1000 cycles of 85% or more; or, the sodium-ion battery has the following properties: a button half-cell charge/discharge current density of 100 mA/g; a first charge capacity of higher than 300 mAh/g; a capacity retention after 1000 cycles of 85% or more; or, preferably, the carbon electrode material serves as anode.

20. A supercapacitor, comprising the carbon electrode material according to claim 16.
